# EUROPEAN PATENT APPLICATION

(11) **EP 3 719 339 A1**
(43) Date of publication of application: **07.10.2020**
(21) Application number: 19170054.1
(22) Date of filing: 18.04.2019
(51) Int. Cl.: F16D 27/08, F02B 75/04, F16C 3/28

(54) **AN APPARATUS INCLUDING AN ADJUSTING SYSTEM FOR ADJUSTING A ROTATIONAL POSITION OF A SHAFT WITH RESPECT TO A SHAFT HOLDING MEMBER**

(30) Priority: 05.04.2019 EP 19167636
(71) Applicant: Gomecsys B.V., 1411 AR Naarden (NL)
(72) Inventor: De Gooijer, Lambertus Hendrik, 1401 EP BUSSUM (NL)
(74) Representative: De Vries & Metman

(57) **Abstract**

An apparatus (1) includes an adjusting system for adjusting a rotational position of a shaft with respect to a shaft holding member, comprising a frame (2), a shaft (15) which is rotatably supported by the frame (2), a shaft holding member (19, 21) which is linked to the frame (2) and which is connectable to the shaft (15), wherein the shaft (15) is rotatable with respect to the shaft holding member (19, 21) about a centreline (5) of the shaft (15), wherein the adjusting system is provided with a driving source (6, 9) for applying a torque on the shaft (15), a friction coupling (F) for connecting the shaft (15) and the shaft holding member (19, 21) to each other and blocking the shaft (15) and the shaft holding member (19, 21) with respect to each other in rotational direction of the shaft (15), a spring (22) for applying a predetermined force on the friction coupling (F) so as to create a predetermined friction force at the friction coupling (F), an actuator (17) being in engagement with the spring (22), an electromagnet (20) for exerting a force on the actuator (17), wherein the spring (22) and the actuator (17) are adapted such that under operating conditions the force on the friction coupling (F), caused by the spring (22), in a non-operated condition of the electromagnet (20) is higher than a force on the friction coupling (F) in an active condition of the electromagnet (20).

## Description

The present invention relates to an apparatus including an adjusting system for adjusting a rotational position of a shaft with respect to a shaft holding member, comprising a frame, a shaft which is rotatably supported by the frame, a shaft holding member which is linked to the frame and which is connectable to the shaft, wherein the shaft is rotatable with respect to the shaft holding member about a centreline of the shaft, wherein the adjusting system is provided with a friction coupling for connecting the shaft and the shaft holding member to each other and blocking the shaft and the shaft holding member with respect to each other in rotational direction of the shaft, and a driving source for applying a torque on the shaft.

An example of such an apparatus is known from WO 2013/110700. The known apparatus is an engine having variable compression ratio. The compression ratio can be varied by turning an adjusting shaft with respect to the engine block, which adjusting shaft extends concentrically through the crankshaft. The engine is provided with a shaft holding member in the form of an electromagnet which cooperates with a friction element that is fixed to the adjusting shaft in rotational direction thereof and which is slidable with respect to the adjusting shaft in axial direction thereof. The shaft holding member is fixed to the engine block. The connecting rod of the engine forms the driving source for applying a torque on the adjusting shaft, caused by combustion forces on the connecting rod. When the electromagnet is operated the friction element will be pulled against the electromagnet and will have a fixed position with respect to the engine block. When the electromagnet is switched-off the friction member can be rotated with respect to the engine block in one direction by means of a torsion spring or in opposite direction by means of average combustion forces acting on the adjusting shaft in that direction. The average angular position of the adjusting shaft is determined by a natural balance between the actual average load of the adjusting shaft on the torsion spring and the actual spring force of the torsion spring on the adjusting shaft. At a different load, the action and reaction force between the adjusting shaft and the torsion spring, i.e. the natural balance, lies at a different level. When a desired rotational position of the adjusting shaft is achieved the position is maintained by switching-on the electromagnet.

In certain cases the average combustion forces may be too low to change the rotational position of the adjusting shaft in a way as described in the above-mentioned prior art, for example in case of an engine in which the inertia forces are relatively high. This may be the case in high-speed one-cylinder engines, for example, such as applicable in motorbikes. The adjusting system of the prior art as described above comprises the connecting rod, the electromagnet, the friction element and the torsion spring and is applied at an internal combustion engine, but the adjusting system is neither limited to the application in internal combustion engines nor to an adjusting shaft of an internal combustion having variable compression ratio.

In general terms, an object of the invention is to provide an apparatus including a flexible adjusting system for adjusting a rotational position of a shaft on which a torque is applied by a driving source.

This object is accomplished with the apparatus according to the invention wherein the adjusting system is further provided with a spring for applying a predetermined force on the friction coupling so as to create a predetermined friction force at the friction coupling, which spring cooperates with one of the shaft and the shaft holding member, an actuator being in engagement with the spring, an electromagnet for exerting a force on the actuator, wherein the spring and the actuator are adapted such that under operating conditions the force on the friction coupling, caused by the spring, in a non-operated condition of the electromagnet is higher than a force on the friction coupling in an active condition of the electromagnet.

The shaft holding member and the shaft are connectable to each other through the friction coupling. In the non-operated condition of the electromagnet the spring exerts a relatively high force on the friction coupling, resulting in a relatively high friction force at the friction coupling, whereas in the active condition of the electromagnet the electromagnet exerts a force on the actuator such that a resulting force on the friction coupling is lower, resulting in a relatively low friction force or even no friction force. Since the spring creates a friction force at the friction coupling the spring force will have a component extending perpendicularly to cooperating contact surfaces of the friction coupling. Furthermore, it may be clear, that the actual force of the electromagnet on the actuator depends on the electric current through the electromagnet.

The apparatus according to the present invention provides the opportunity to switch the electromagnet to the active condition during a relatively short period. For example, if torque on the shaft varies with its angular position with respect to the shaft holding member and torque on the shaft can even be exerted in opposite rotational directions a temporary peak torque can be selected to switch-on the electromagnet and to allow the shaft to be rotated with respect to the shaft holding member in the desired direction. Switching-on the electromagnet causes a reduction of the friction force. When the actual torque on the shaft is higher than a counter torque generated by the reduced friction force at the friction coupling the shaft starts rotating.

Preferably, the spring, the actuator and the electromagnet are adapted such that the resulting force on the friction coupling in the active condition of the electromagnet is lowered without separating contact surfaces of the friction coupling. It is conceivable to allow the contact surfaces to be separated from each other in order to fully eliminate the friction force, but such a displacement takes time and is generally undesired.

The spring may cooperate with one of the shaft and the shaft holding member.

It is noted that although the shaft holding member is linked to the frame according to the invention, it does not mean that it must be fixed to the frame. If the shaft continuously rotates with respect to the frame under operating conditions the shaft holding member will also rotate with respect to the frame. Hence, the shaft holding member may also be formed of a shaft which is rotatable with respect to the frame. Such a situation may happen when the shaft is an adjustable camshaft of an internal combustion engine, for example. The camshaft and the shaft holding member rotate together at the same speed if the mutual rotational positions of the camshaft and the shaft holding member are the same. If the angular position of the camshaft should be adapted with respect to the angular position of the shaft holding member, the electromagnet can be activated to reduce the friction force during a period in which torque on the camshaft has a desired level and direction, and the torque level exceeds the reduced friction force. It is possible in this case to mount the electromagnet to the shaft holding member such that it rotates together with the shaft holding member. The actual torque level can be measured by sensors at the shaft, for example.

The shaft holding member may be attached or may be attachable to the frame, or it may form a part of the frame. In this case the shaft is also held in a fixed rotational position with respect to the frame by the friction coupling and can be turned by the driving source upon temporarily switching-on the electromagnet.

In a practical embodiment the friction coupling has cooperating contact surfaces extending in transverse direction of the shaft, whereas the spring is adapted such that the force on the friction coupling is directed in axial direction of the shaft. For example, the contact surface at the shaft may be formed by a flange on the shaft.

In a particular embodiment, the shaft holding member has a fixed position with respect to the frame, and the friction coupling comprises a friction wall having a fixed position with respect to the frame and a friction member being coupled to the shaft and having a fixed position with respect to the shaft in its rotational direction, wherein the friction member is located opposite to the friction wall, wherein the spring is arranged between the friction member and the shaft holding member at a distance from the friction wall such that under operating conditions the friction member is pushed against the friction wall by the spring. The friction member may be located between the friction wall and the spring, for example.

The friction member may be fixed to the shaft, wherein the friction member including the shaft are movable in axial direction of the shaft with respect to the friction wall.

In practice the displacement of the friction member may be very small such that a displacement is hardly visible by human eyes. In case of maintaining contact between the contact surfaces of the friction coupling in the active condition of the electromagnet a displacement may be considered as an elastic deformation of the contacting surfaces. In case of separating the contact surfaces of the friction coupling in the active condition of the electromagnet the displacement should preferably be small.

In a particular embodiment the actuator is formed by the friction member. The actuator and the friction member may be an integral unit which has a friction surface and which is made of a material that cooperates with the electromagnet, for example a metal plate.

There may be a roller bearing between the friction member and the spring in order to minimize friction between the friction member and the spring upon rotating them with respect to each other. This prevents the friction member from exerting a torsional force on the spring upon rotating the friction member with respect to the shaft holding member.

The spring may be a coil spring which has a centreline that coincides with the centreline of the shaft.

The apparatus may also be provided with a return spring, which is mounted to the shaft and the shaft holding member for creating a return force on the shaft in case of turning the shaft in one direction with respect to the shaft holding member. The return spring may be a torsion spring, for example.

In a specific embodiment, the apparatus comprises an internal combustion engine, wherein the shaft holding member is attached or attachable to the frame, or it forms a part of the frame, wherein the frame is formed by an engine block, and wherein the engine is further provided with a crankshaft having at least a crankpin, the crankshaft being supported by the engine block and rotatable with respect thereto about a crankshaft axis, an eccentric element for supporting a connecting rod, which eccentric element is rotatably mounted on the crankpin, wherein the shaft is an adjusting shaft for varying the rotational position of the eccentric element with respect to the crankshaft at a virtual standstill of the crankshaft so as to vary its compression ratio, which adjusting shaft extends concentrically through the crankshaft such that its centreline coincides with the crankshaft axis and which adjusting shaft is rotatable with respect to the crankshaft, a transmission through which the eccentric element is drivably coupled to the adjusting shaft, wherein the connecting rod forms the driving source for applying a torque on the adjusting shaft under operating conditions, wherein the transmission is adapted such that when the adjusting shaft has a substantially fixed angular position with respect to the engine block under operating conditions the eccentric element rotates with respect to the crankpin in opposite direction of the direction in which the crankshaft rotates with respect to the engine block about the crankshaft axis and at half speed thereof. In this embodiment the adjusting shaft is supported by the engine block through the crankshaft. The connecting rod exerts a force onto the eccentric element which in turn exerts a torque on the adjusting shaft. The torque level varies with the rotational position of the crankshaft and depends on the actual engine operating mode.

The invention is also related to a method of operating the internal combustion engine as described hereinbefore, wherein each of the periods in which the electromagnet is in an uninterrupted operating condition is shorter than one revolution of the crankshaft, preferably shorter than a half revolution. For example, the electromagnet can be operated uninterruptedly during a portion of a combustion cycle in which a combustion force creates a torque in one direction of the adjusting shaft, whereas the average torque on the adjusting shaft hardly changes.

In order to facilitate the method of operating the engine it is conceivable to determine actual torque in the adjusting shaft and switch-on the electromagnet only above a predetermined torque level. Alternatively, torque traces may be determined during calibrating the engine type such that an engine management system of the engine can look-up the actual torque in a table. It is also noted, that the timing of switching-on the electromagnet may be advanced in order to provide sufficient time to develop an electromagnetic field.

The spring may be adapted such that in case of failure of the electromagnet or its control the friction coupling will slip when torque on the shaft exceeds a predetermined level. For example, in case of the application on an engine as described above, the engine may run at a low load in combination with a high compression ratio and may suddenly operated at a high load condition in which a low compression ratio should be set. Under normal operating conditions the electromagnet will be switched-on such that the combustion force can turn the adjusting shaft to a position corresponding to a low compression ratio. If this action is omitted due to a failure, the engine will create a sudden high combustion peak due to knocking, resulting in a relatively high torque peak on the adjusting shaft. The spring can be adapted such that the friction coupling still allows a rotation of the adjusting shaft under these conditions against the relatively high friction force. It is clear that the direction of the torque peak on the adjusting shaft should correspond to an angular direction of the adjusting shaft towards a condition of low compression ratio.

In another aspect the invention is related to an apparatus including an adjusting system for adjusting a rotational position of a shaft with respect to a shaft holding member, comprising a frame, a shaft which is rotatably supported by the frame, a shaft holding member which is linked to the frame and which is coupled to the shaft, wherein the shaft is rotatable with respect to the shaft holding member about a centreline of the shaft, wherein the adjusting system is provided with a driving source for applying a torque on the shaft, a first controllable freewheel mechanism and a second controllable freewheel mechanism through which mechanisms the shaft holding member is coupled to the shaft, wherein the first controllable freewheel mechanism has a first condition in which it allows rotation of the shaft with respect to the shaft holding member in only a first direction and a second condition in which it allows rotation of the shaft with respect to the shaft holding member in both opposite directions, and wherein the second controllable freewheel mechanism has a first condition in which it allows rotation of the shaft with respect to the shaft holding member in only a second direction which is opposite to the first direction and a second condition in which it allows rotation of the shaft with respect to the shaft holding member in both opposite directions.

When the first freewheel mechanism is in its first condition and the second freewheel mechanism is in its second condition the shaft can be rotated with respect to the shaft holding member in the first direction when the torque on the shaft is directed in the first direction. Similarly, when the first freewheel mechanism is in its second condition and the second freewheel mechanism is in its first condition the shaft can be rotated with respect to the shaft holding member in the second direction when the torque on the shaft is directed in the second direction.

The shaft holding member may be attached or attachable to the frame, or it may form a part of the frame. In this case the shaft is also held in a fixed rotational position with respect to the frame by setting both controllable freewheel mechanisms in their first conditions and can be turned by the driving source upon setting one of the first and second controllable freewheel mechanisms in its second condition.

In a practical embodiment the first and second freewheel mechanisms comprise respective ratcheting devices, each having a pawl which is engageable with a toothed wheel that is fixed to the adjusting shaft. Because of the freewheel character, the pawls and the toothed wheel will be shaped such that when the shaft rotates in the free direction the engaged pawl will automatically be lifted from between two neighbouring teeth of the toothed wheel.

Each of the pawls may form part of a spring-loaded lever which is mounted to the shaft holding member and which maintains the pawl in engagement with the toothed wheel by a spring force in the first condition and which disengages the pawl from the toothed wheel by rotating the lever through a lever actuator in the second condition.

In an alternative practical embodiment each of the first and second freewheel mechanisms comprises a freewheel unit including a drivable side and a driven side, wherein the drivable side is connected to the shaft in order to be driven by the shaft, and wherein the driven side is engageable with the shaft holding member via a controllable friction coupling for blocking the shaft and the shaft holding member with respect to each other in rotational direction of the shaft. The freewheel unit may be a standard freewheel unit that is well-known by the skilled person, for example a standard freewheel unit including a plurality of rollers. The drivable side rotates together with the shaft, whereas the driven side rotates together with the shaft in only one direction when the friction coupling is in a non-activated condition.

The drivable side may be slidable with respect to the shaft in axial direction thereof in order to enable the freewheel unit to move in axial direction of the shaft. The friction coupling may be formed by the driven side and the shaft holding member. In that case the freewheel unit may be provided with an actuator for moving the freewheel unit between a position in which the driven side and the shaft holding member form an active friction coupling and a condition in which the driven side and the shaft holding member form a non-activated friction coupling. The actuator may cooperate with an electromagnet, which is mounted to one of the shaft and the shaft holding member. The friction coupling may be supported by a spring for pushing the driven side and the shaft holding member to each other in the event that the electromagnet is switched-off such that the driven side and the shaft holding member are moved away from each other in the event that the electromagnet is switched-on, or for moving the driven side and the shaft holding member away from each other in the event that the electromagnet is switched-off such that the driven side and the shaft holding member are moved to each other in the event that the electromagnet is switched-on.

Each of the first and second freewheel mechanisms may comprise a spring which is arranged such that in a non-activated condition of the corresponding electromagnet the driven side is pressed against the shaft holding member by the spring and in an activated condition of the corresponding electromagnet the driven side is pulled against the spring force in a direction away from the shaft holding member.

A return spring may be mounted to the shaft and the shaft holding member for creating a return force on the shaft in case of turning the shaft. This provides the opportunity to return the shaft if torque on the shaft is directed in only one rotational direction.

In a specific embodiment, the apparatus comprises an internal combustion engine, wherein the shaft holding member is attached or attachable to the frame, or it forms a part of the frame, wherein the frame is formed by an engine block, wherein the engine is further provided with a crankshaft having at least a crankpin, the crankshaft being supported by the engine block and rotatable with respect thereto about a crankshaft axis, an eccentric element for supporting a connecting rod, which eccentric element is rotatably mounted on the crankpin, wherein said shaft is an adjusting shaft for varying the rotational position of the eccentric element with respect to the crankshaft at a virtual standstill of the crankshaft so as to vary its compression ratio, which adjusting shaft extends concentrically through the crankshaft such that its centreline coincides with the crankshaft axis and which adjusting shaft is rotatable with respect to the crankshaft, a transmission through which the eccentric element is drivably coupled to the adjusting shaft, wherein the connecting rod forms the driving source for applying a torque on the adjusting shaft under operating conditions, wherein the transmission is adapted such that when the adjusting shaft has a substantially fixed angular position with respect to the engine block under operating conditions the eccentric element rotates with respect to the crankpin in opposite direction of the direction in which the crankshaft rotates with respect to the engine block about the crankshaft axis and at half speed thereof.

The invention is also related to a method of operating the internal combustion engine as described above, wherein the first freewheel mechanism is switched to its first condition and the second freewheel mechanism is switched to its second condition so as to turn the adjusting shaft to a different rotational position with respect to the engine block by a torque on the adjusting shaft.

It is noted that the first condition may be an activated condition and the second condition may be a de-activated condition. Similarly, the second condition may be an activated condition and the first condition may be a de-activated condition.

The invention will hereafter be elucidated with reference to very schematic drawings showing embodiments of the invention by way of example.
Fig. 1 is a perspective view of an embodiment of an apparatus according to the invention.
Fig. 2 is a perspective view of a part of the embodiment of Fig. 1 on a larger scale.
Fig. 3 is a perspective sectional view of another part of the embodiment of Fig. 1 on a larger scale and seen from a different side.
Fig. 4 is a perspective view of the part as shown in Fig. 3, as seen from a different side.
Fig. 5 is a perspective view of a part of an alternative embodiment of an apparatus according to the invention.
Fig. 6 is a frontal view of the part as shown in Fig. 5.
Fig. 7 is a similar view as Fig. 5, but showing another alternative embodiment of an apparatus according to the invention.
Fig. 8 is a perspective sectional view of a part of the embodiment as shown in Fig. 7 on a larger scale.
Fig. 9 is a similar view as Fig 9, but illustrating a sectional view at a different sectional plane.

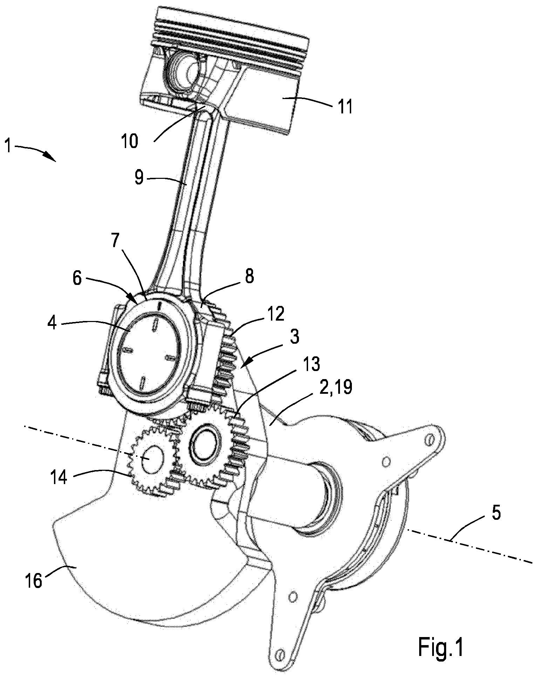

Fig. 1 shows a part of an embodiment of an apparatus according to the invention. The embodiment of the apparatus comprises a reciprocating internal combustion engine 1 of which the compression ratio can be adjusted. The engine 1 is provided with an engine block 2, which supports a crankshaft 3 by crankshaft bearings (not shown). The crankshaft 3 includes a crankpin 4 and is rotatable with respect to the engine block 2 about a crankshaft axis 5.

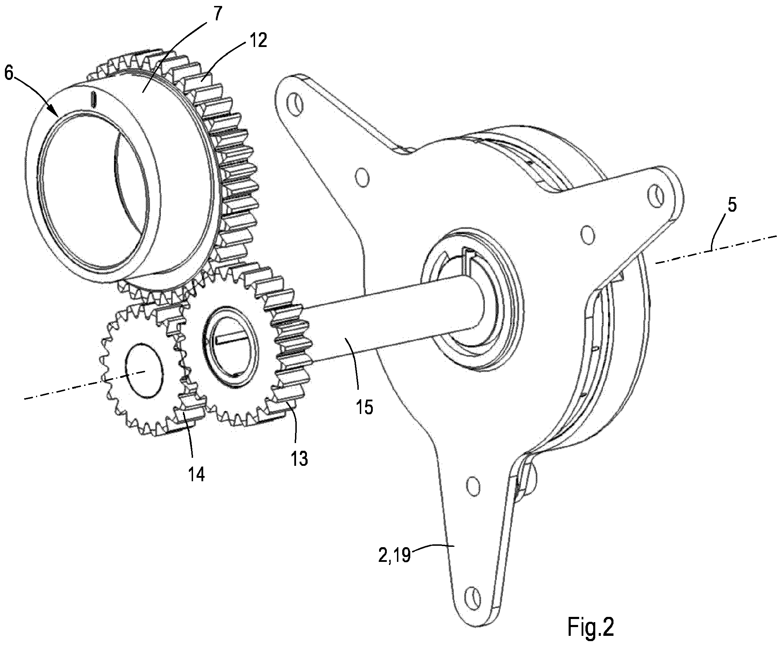

The engine 1 comprises an eccentric element 6 which is rotatably mounted on the crankpin 4. The eccentric element 6 is provided with a bearing portion 7 which is disposed eccentrically with respect to the crankpin 4, see Fig. 2. The bearing portion 7 has an outer circumferential wall which bears a big end 8 of a connecting rod 9. Thus, the connecting rod 9 is rotatably mounted on the eccentric element 6 via its big end 8. The connecting rod 9 also includes a small end 10 to which a piston 11 is rotatably connected. The crankshaft 3 and connecting rod 9 are not shown in Fig. 2 for clarity reasons.

The eccentric element 6 is provided with an eccentric element gear 12 which meshes with an intermediate gear 13. The intermediate gear 13 is rotatably mounted to the crankshaft 3 and its axis of rotation extends parallel to the crankshaft axis 5. The intermediate gear 13 also meshes with an auxiliary gear 14. The auxiliary gear 14 is fixed to an adjusting shaft 15. The adjusting shaft 15 extends concentrically through the crankshaft 3 and is rotatable with respect to the crankshaft 3 about the crankshaft axis 5. Thus, the adjusting shaft 15 is rotatable about its centreline which coincides with the crankshaft axis 5. As a consequence, the centreline of the auxiliary gear 14 coincides with the crankshaft axis 5. In fact, the adjusting shaft 15 is supported by the engine block 2 through the crankshaft 3 and rotatable with respect to the engine block 2 about the centreline of the adjusting shaft 15.

Fig. 1 shows that the auxiliary gear 14, the intermediate gear 13 and the eccentric element gear 12 are mounted at the same side of a crank arm 16 of the crankshaft 3. The crank arm 16 and a main portion of the crankshaft that is supported by an adjacent crankshaft bearing are integrated such that the adjusting shaft 15 extends through both. Thus, the adjusting shaft 15 extends within the main portion at the crankshaft bearing. The auxiliary gear 14, the intermediate gear 13 and the eccentric element gear 12 form a transmission through which the eccentric element 6 is drivably coupled to the adjusting shaft 15.

The gear dimensions are selected such that under operating conditions the eccentric element 6 rotates with respect to the crankpin 4 in opposite direction of the direction in which the crankshaft 3 rotates with respect to the engine block 2 about the crankshaft axis 5 and at half speed thereof. The directions and speeds of rotation are achieved when the gear ratio between the eccentric element gear 12 and the auxiliary gear 14 is two and the adjusting shaft 15 is held at a fixed angular position with respect to the engine block 2. Hence, the rotational position of the eccentric element 6 with respect to the crankshaft 3 can be varied at a virtual standstill of the crankshaft 3 so as to vary its compression ratio.

The engine 1 as shown in Figs. 1-4 provides the opportunity to adjust the top dead centre of the piston 11, hence its compression ratio, by changing the angular position of the adjusting shaft 15 with respect to the engine block 2. The functioning of the engine is explained in more detail in WO 2013/110700.

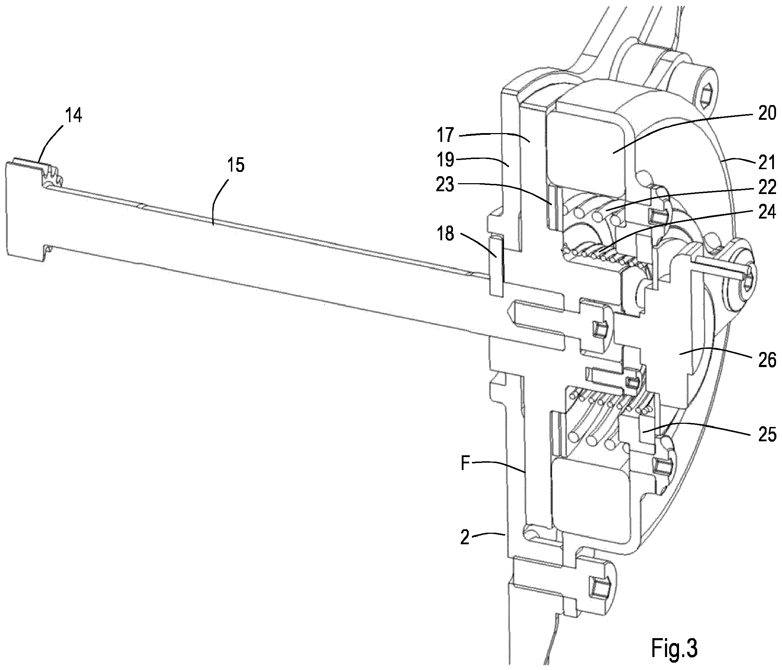

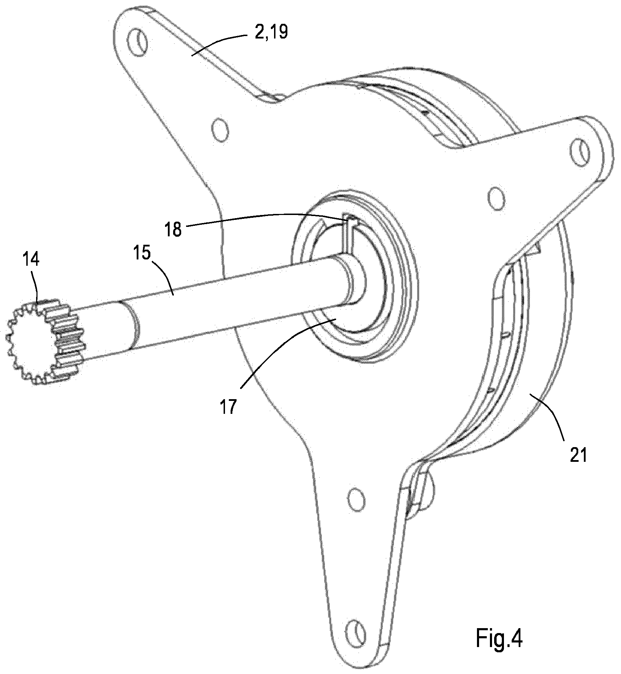

Figs. 3 and 4 show parts of an adjusting system of the engine 1 for adjusting the rotational position of the adjusting shaft 15 with respect to the engine block 2. A friction member in the form of a friction plate 17 is mounted to the adjusting shaft 15. The friction plate 17 is fixed to the adjusting shaft 15. The friction plate 17 and the adjusting shaft 15 together are slightly movable with respect to the engine block 2 in axial direction of the adjusting shaft 15. The maximum displacement of the friction plate 17 and the adjusting shaft 15 may be very small in practice, in the order of magnitude of microns, such that in practice a displacement is hardly visible. Fig. 3 shows that the friction plate 17 is located between a wall plate 19 which is attached to the engine block 2 and an electromagnet 20. In Figs. 1-4 the engine block 2 and the wall plate 19 form a common part. The electromagnet 20 is located inside a shaft holding member in the form of a housing 21 and fixed thereto. The housing 21 is attached to the engine block 2.

Furthermore, a coil spring 22 is mounted between the housing 21 and the friction plate 17. The coil spring 22 extends concentrically about the crankshaft axis 5 and is biased so as to push the friction plate 17 against the wall plate 19. Opposite contact surfaces of the wall plate 19 and the friction plate 17 form a friction coupling F for blocking the adjusting shaft 15 with respect to the engine block 2 in rotational direction of the adjusting shaft 15. Under operating conditions there is a continuous friction force between the wall plate 19 and the friction plate 17, and thus the adjusting shaft 15, in rotational direction of the adjusting shaft 15.

The electromagnet 20 cooperates with the friction plate 17. Upon activating the electromagnet 20 it exerts a force on the friction plate 17 in a direction opposite to the direction of the spring force of the coil spring 22 onto the friction plate 17. Consequently, the resulting force on the friction plate 17 is reduced, resulting in a lower friction force at the friction coupling F. Hence, in the embodiment as shown in Fig. 3 the friction plate 17 also functions as an actuator which is in engagement with the coil spring 22 according to the invention. The coil spring 22 is adapted such that under operating conditions the adjusting shaft 15 has a fixed rotational position with respect to the engine block 2 in case of a non-operated condition of the electromagnet 20. In non-operated condition of the electromagnet 20 the friction plate 17 is pushed against the wall plate 19 by the coil spring 22 by a force which is higher than the resulting force of the friction plate 17 onto the wall plate 19 in the active condition of the electromagnet 20.

If the electromagnet 20 is actuated the friction plate 17 including the adjusting shaft 15 can be rotated with respect to the housing 21. A roller bearing 23 is located between the coil spring 22 and the friction plate 17 in order to avoid a torsional force on the coil spring 22 upon rotating the friction plate 17 with respect to the engine block 2. The maximum rotation is limited by a key 18 in the adjusting shaft 15, which allows rotation between opposite angles at which the key 18 is blocked by abutments of the engine block 2.

A torsion spring 24 is mounted to the adjusting shaft 15 through the friction plate 17 and to the housing 21 through a ring 25. The rotational position of the ring 25 is adjustable with respect to the housing 21 in order to adjust the pre-tension level of the torsion spring 24. The torsion spring 24 functions as a return spring for creating a return force on the adjusting shaft 15 in case of turning the adjusting shaft 15.

Under operating conditions the connecting rod 9 exerts a torque on the adjusting shaft 15 via the eccentric element 6, the eccentric element gear 12, the intermediate gear 13 and the auxiliary gear 14, caused by combustion forces or inertia forces onto the connecting rod 9. Hence, the connecting rod 9 may be considered as being a driving source for applying a torque on the adjusting shaft 15. The torque varies with the rotational position of the crankshaft 3 and depends on the combustion forces as well as on inertia effects of the reciprocating mechanism. The embodiment of the apparatus 1 as shown in Figs. 1-4 provides the opportunity to change the rotational position of the adjusting shaft 15 by means of temporarily activating the electromagnet 20 such that the force of the friction plate 17 onto the wall plate 19 decreases and the torque on the friction plate 17 exceeds the friction torque between the friction plate 17 and the wall plate 19. This means that a temporarily increased torque level on the adjusting shaft 15, caused by the connecting rod 9, can change the rotational position of the adjusting shaft 15 with respect to the engine block 2.

For example, if a lower compression ratio is desired because of running the engine at a higher load, the electromagnet 20 can be switched-on during a period in which a combustion force temporarily exerts a torque on the adjusting shaft 15 in the desired direction. The torque acts against the spring force of the torsion spring 24 and the friction force between the friction plate 17 and the wall plate 19, which friction force might still be active at a relatively low level in spite of the lowered force on the friction coupling F. When switching to a lower engine load, the electromagnet 20 can be switched-on during a period in which the actual torque on the adjusting shaft 15 in opposite rotational direction, created by the connecting rod 9, together with the torque generated by the spring force of the torsion spring 24 on the adjusting shaft 15 is higher than the friction force of the friction coupling F.

It is noted that the adjusting system in the embodiment as shown in Figs. 1-4 comprises the connecting rod 9 and the eccentric member 6 for applying a torque on the adjusting shaft 15, the coil spring 22, the friction plate 17, the friction coupling F between the friction plate 17 and the wall plate 19, and the electromagnet 20.

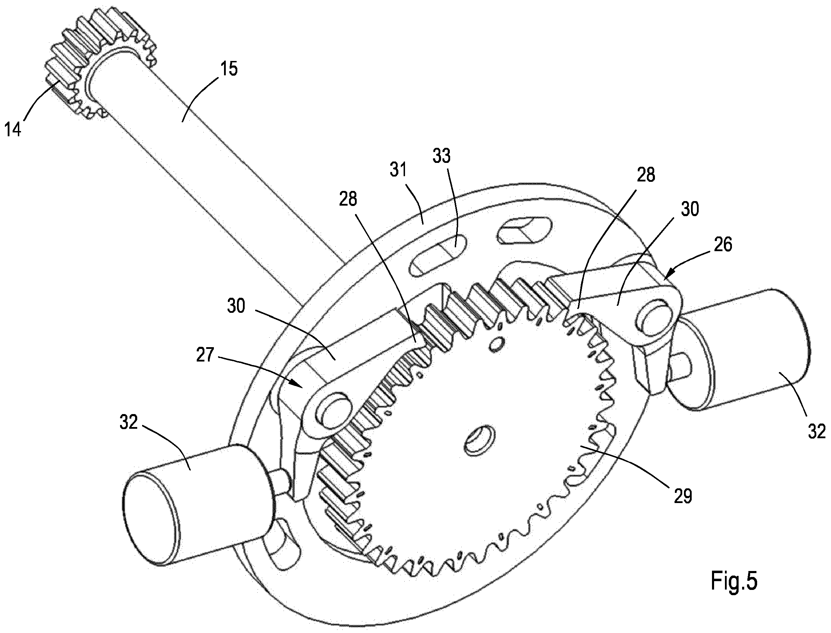

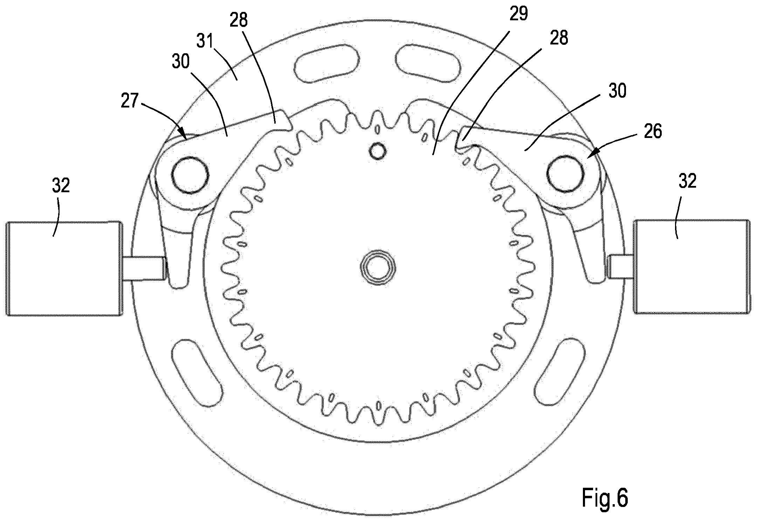

Figs. 5 and 6 show a part of an alternative embodiment of an apparatus 1 according to the invention, which is provided with a different adjusting system. This embodiment also comprises an internal combustion and has a similar transmission between the eccentric element 6 and the adjusting shaft 15 as the embodiment described above. The embodiment as shown in Figs. 5 and 6 has an adjusting system which is also provided with the connecting rod 9 and is further provided with a first controllable freewheel mechanism 26 and a second controllable freewheel mechanism 27. Each of the freewheel mechanisms 26, 27 cooperates with the adjusting shaft 15 and has a first or activated condition in which it allows rotation of the adjusting shaft 15 in only a first direction and a second or non-activated condition in which it allows rotation in both opposite directions. For example, in the conditions as shown in Figs. 5 and 6 the first controllable freewheel mechanism 26 is in the activated condition and allows only a rotation of the adjusting shaft 15 in anti-clockwise direction, whereas the second controllable freewheel mechanism 27 is in the non-activated condition and allows a rotation of the adjusting shaft 15 in both clockwise and anti-clockwise direction. However, in this situation a rotation in clockwise direction is blocked by the first controllable freewheel mechanism 26.

When under operating conditions a force peak of the connecting rod 9 creates a torque onto the adjusting shaft 15 in anti-clockwise direction the adjusting shaft 15 can be rotated in that direction as long as the second freewheel mechanism 27 remains in the non-activated condition. A negative force peak, i.e. when a force creates a torque onto the adjusting shaft 15 in clockwise direction the adjusting shaft 15 is blocked by the first freewheel mechanism 26.

The first and second controllable freewheel mechanisms 26, 27 are provided with ratcheting devices, each having a pawl 28 which is engageable with a toothed wheel 29 that is fixed to the adjusting shaft 15. The pawls 28 form part of respective spring-loaded levers 30 which are rotatably mounted to a mounting plate 31 which is fixed to the engine block 2. In this case the mounting plate 31 can be considered as being the shaft holding member of the invention. In the activated condition the lever 30 keeps the corresponding pawl 28 in engagement with the toothed wheel 29 by a spring force. The levers 30 can be rotated by respective lever actuators 32, for example relays, in order to disengage the corresponding pawl 28 from the toothed wheel 29 in the non-activated condition. Because of the freewheel character, the pawls 28 and the toothed wheel 29 are shaped such that when the adjusting shaft 15 rotates in the free direction the engaged pawl 28 will automatically be lifted from between two neighbouring teeth of the toothed wheel 29.

A return spring (not shown) is mounted to the adjusting shaft 15 and the engine block 2 for creating a return force on the adjusting shaft 15 in case of turning the adjusting shaft 15 in one direction. This may typically be desired if torque on the adjusting shaft 15 is mainly directed in one direction.

It is noted that the adjusting shaft 15 is rotatable by discrete steps, of which the amount depends on the pitch of the teeth on the toothed wheel 29.

The mounting plate 31 including the toothed wheel 29 and the adjusting shaft 15 including the auxiliary gear 14 can be mounted as a single assembly to the crankshaft 3 and the engine block 2. The mounting plate 31 is provided with slotted holes 33 which allow the mounting plate 31 to be adjusted in rotational direction about the crankshaft axis 5 during assembly.

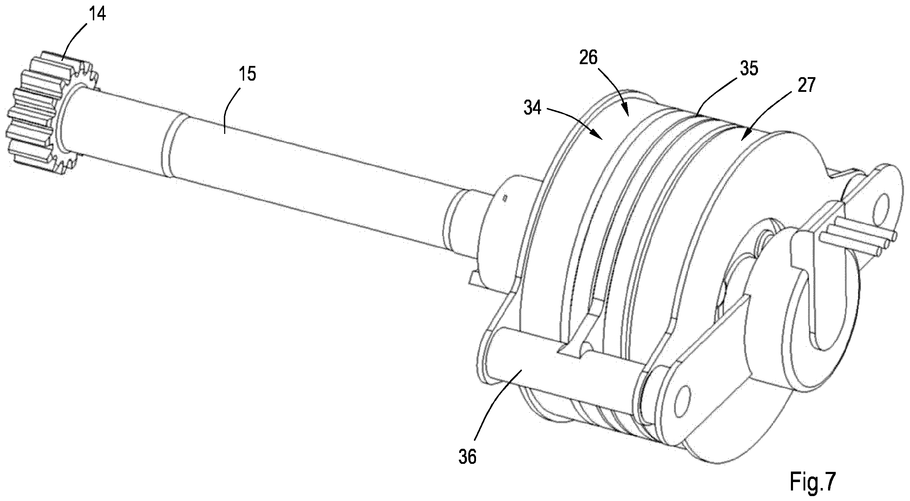

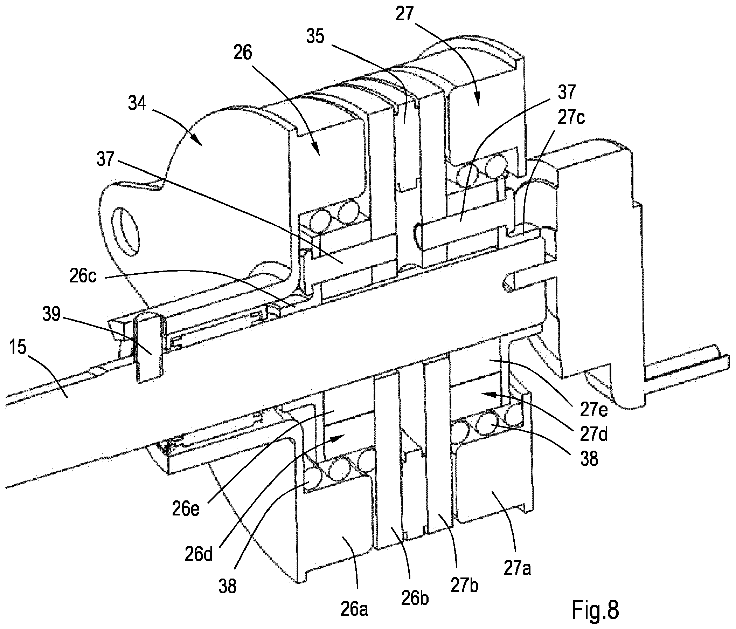

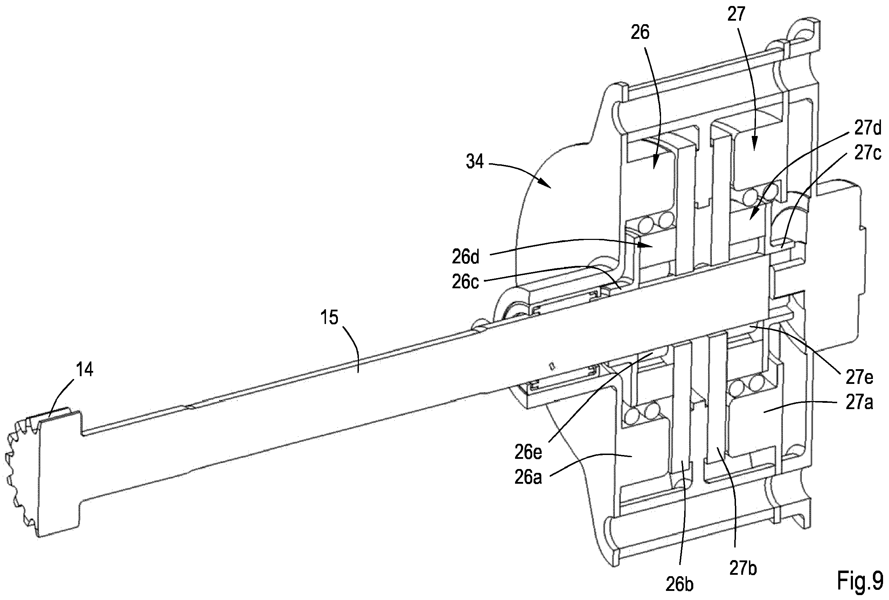

Figs. 7-9 show an alternative embodiment of an apparatus 1 according to the invention, which is provided with a different adjusting system. This embodiment also comprises an internal combustion and has a similar transmission between the eccentric element 6 and the adjusting shaft 15 as the embodiments described above. The embodiment as shown in Figs. 7-9 has an adjusting system which is also provided with the connecting rod 9 and is further provided with first and second controllable freewheel mechanisms 26, 27.

In this case the shaft holding member is formed by a casing 34 which is fixed to the engine block 2. The casing 34 is provided with a central friction element 35 which is fixed to the remainder of the casing 34 through supports 36. The adjusting shaft 15 is rotatable with respect to the casing 34 about the centreline of the adjusting shaft 15. The adjusting shaft 15 is supported by the casing 34 through a needle bearing, but an alternative bearing is conceivable. The adjusting system is further provided with the first and second controllable freewheel mechanisms 26, 27 which have a different configuration with respect to the embodiment as shown in Figs. 5 and 6.

The first controllable freewheel mechanism 26 comprises a controllable electromagnet 26a which cooperates with a freewheel actuator 26b, whereas the second controllable freewheel mechanism 27 comprises a controllable electromagnet 27a which cooperates with a freewheel actuator 27b. The electromagnets 26a, 27a are fixed to the casing 34. The respective combinations of cooperating electromagnet and freewheel actuator 26a, 26b and 27a, 27b are located at opposite sides of the central friction element 35.

The freewheel actuators 26b, 27b are fixed to respective sleeves 26c, 27c through bolts 37. The sleeves 26c, 27c are slidably mounted on the adjusting shaft 15. The freewheel actuators 26b, 27b are pushed against the central friction element 35 by respective coil springs 38 which are located between the freewheel actuators 26b, 27b and respective portions of the casing 34 at a distance from the central friction element 35. Standard freewheel units 26d, 27d including rollers 26e, 27e are sandwiched between the sleeves 26c, 27c and the freewheel actuators 26b, 27b. Such standard freewheel units are well-known to the skilled person. The sleeves 26c, 27c form respective centering members for the freewheel units 26d, 27d. Respective portions of the adjusting shaft 15 at the rollers 26e, 27e may be considered as being respective drivable sides of the respective freewheel units 26d and 27d, whereas the freewheel actuators 26b, 27b may be considered as being the driven sides of the respective freewheel units 26d and 27d.

When the electromagnet 26a of the first controllable freewheel mechanism 26 is activated it pulls the freewheel actuator 26b in a direction away from the central friction element 35 against the spring force of the corresponding spring 38 and allows rotation of the freewheel actuator 26b including the adjusting shaft 15 in both directions with respect to the casing 34. When in this case the electromagnet 27a of the second controllable freewheel mechanism 27 is not activated the corresponding freewheel actuator 27b is pushed against the central friction element 35 by the corresponding spring 38 such that the corresponding standard freewheel unit 27d allows the adjusting shaft 15 to rotate in only one direction. In other words, the second controllable freewheel mechanism 27 is in its first condition and the first controllable freewheel mechanism 26 is its second condition.

In a similar way the electromagnet 27a of the second controllable freewheel mechanism 27 can be activated whereas the electromagnet 26a of the first controllable freewheel mechanism 26 can be de-activated in order to allow the adjusting shaft 15 to rotate in the opposite direction only.

The adjusting shaft 15 of the embodiment as shown in Figs. 7-9 is also provided with a key 39 which cooperates with abutments at the casing 34 in order to define maximum angular positions of the adjusting shaft 15 with respect to the casing 34.

An advantage of this embodiment is that the angular position of the adjusting shaft is continuously variable rather than by increments.

The invention is not limited to the embodiments shown in the drawings and described hereinbefore, which may be varied in different manners within the scope of the claims and their technical equivalents.

## Claims

1. An apparatus (1) including an adjusting system for adjusting a rotational position of a shaft with respect to a shaft holding member, comprising
a frame (2),
a shaft (15), which is rotatably supported by the frame (2),
a shaft holding member (19, 21) which is linked to the frame (2) and which is connectable to the shaft (15), wherein the shaft (15) is rotatable with respect to the shaft holding member (19, 21) about a centreline (5) of the shaft (15),
wherein the adjusting system is provided with
a driving source (6, 9) for applying a torque on the shaft (15),
a friction coupling (F) for connecting the shaft (15) and the shaft holding member (19, 21) to each other and blocking the shaft (15) and the shaft holding member (19, 21) with respect to each other in rotational direction of the shaft (15),
a spring (22) for applying a predetermined force on the friction coupling (F) so as to create a predetermined friction force at the friction coupling (F),
an actuator (17) being in engagement with the spring (22),
an electromagnet (20) for exerting a force on the actuator (17),
wherein the spring (22) and the actuator (17) are adapted such that under operating conditions the force on the friction coupling (F), caused by the spring (22), in a non-operated condition of the electromagnet (20) is higher than a force on the friction coupling (F) in an active condition of the electromagnet (20).

2. An apparatus (1) according to claim 1, wherein the shaft holding member (19, 21) is attached or attachable to the frame (2) or forms a part of the frame (2).

3. An apparatus (1) according to claim 1 or 2, wherein the friction coupling (F) has cooperating contact surfaces extending in transverse direction of the shaft (15), whereas the spring (22) is adapted such that the force on the friction coupling (F) is directed in axial direction of the shaft (15).

4. An apparatus (1) according to claim 3, wherein the shaft holding member (21) has a fixed position with respect to the frame (2) and wherein the friction coupling (F) comprises a friction wall (19) having a fixed position with respect to the frame (2) and a friction member (17) being coupled to the shaft (2) and having a fixed position with respect to the shaft (15) in its rotational direction, wherein the friction member (17) is located opposite to the friction wall (19), wherein the spring (22) is arranged between the friction member (17) and the shaft holding member (21) at a distance from the friction wall (19) such that under operating conditions the friction member (17) is pushed against the friction wall (19) by the spring (22).

5. An apparatus (1) according to claims 3 or 4, wherein the actuator is formed by the friction member (17).

6. An apparatus (1) according to any one of the preceding claims, wherein a return spring (24) is mounted to the shaft (15) and the shaft holding member (25) for creating a return force on the shaft (15) in case of turning the shaft (15) in one direction with respect to the shaft holding member (21) .

7. An apparatus (1) according to any one of the preceding claims and claim 2, wherein the apparatus comprises an internal combustion engine (1), and the frame is formed by an engine block (2), wherein the engine (1) is further provided with a crankshaft (3) having at least a crankpin (4), said crankshaft (3) being supported by the engine block (2) and rotatable with respect thereto about a crankshaft axis (5), an eccentric element (6) for supporting a connecting rod (9), which eccentric element (6) is rotatably mounted on the crankpin (4), wherein said shaft is an adjusting shaft (15) for varying the rotational position of the eccentric element (6) with respect to the crankshaft (3) at a virtual standstill of the crankshaft (3) so as to vary its compression ratio, which adjusting shaft (15) extends concentrically through the crankshaft (3) such that its centreline coincides with the crankshaft axis (5) and which adjusting shaft (15) is rotatable with respect to the crankshaft (3), a transmission (12, 13, 14) through which the eccentric element (6) is drivably coupled to the adjusting shaft (15), wherein the connecting rod (9) forms the driving source for applying a torque on the adjusting shaft (15) under operating conditions, wherein the transmission (12, 13, 14) is adapted such that when the adjusting shaft (15) has a substantially fixed angular position with respect to the engine block (2) under operating conditions the eccentric element (6) rotates with respect to the crankpin (4) in opposite direction of the direction in which the crankshaft (3) rotates about the crankshaft axis (5) and at half speed thereof.

8. A method of operating the internal combustion engine (1) according to claim 7, wherein each of the periods in which the electromagnet (20) is in an uninterrupted operating condition is shorter than one revolution of the crankshaft (3), preferably shorter than a half revolution.

9. A method according to claim 8, wherein the actual torque level in the adjusting shaft (15) is determined and wherein the electromagnet is only switched-on above a predetermined torque level.

10. An apparatus (1) including an adjusting system for adjusting a rotational position of a shaft with respect to a shaft holding member, comprising
a frame (2),
a shaft (15), which is rotatably supported by the frame (2),
a shaft holding member (31, 34) which is linked to the frame (2) and which is coupled to the shaft (15), wherein the shaft (15) is rotatable with respect to the shaft holding member (31, 34) about a centreline (5) of the shaft (15),
wherein the adjusting system is provided with
a driving source (6, 9) for applying a torque on the shaft (15),
a first controllable freewheel mechanism (26) and a second controllable freewheel mechanism (27) through which mechanisms (26, 27) the shaft holding member (31, 34) is coupled to the shaft (15), wherein
the first controllable freewheel mechanism (26) has a first condition in which it allows rotation of the shaft (15) with respect to the shaft holding member (31, 34) in only a first direction and a second condition in which it allows rotation of the shaft (15) with respect to the shaft holding member (31, 34) in both opposite directions, and wherein
the second controllable freewheel mechanism (27) has a first condition in which it allows rotation of the shaft (15) with respect to the shaft holding member (31, 34) in only a second direction which is opposite to the first direction and a second condition in which it allows rotation of the shaft (15) with respect to the shaft holding member (31, 34) in both opposite directions.

11. An apparatus (1) according to claim 10, wherein the shaft holding member (31, 34) is attached or attachable to the frame (2) or forms a part of the frame (2).

12. An apparatus according to claim 10 or 11, wherein the first and second freewheel mechanisms (26, 27) comprise respective ratcheting devices, each having a pawl (28) which is engageable with a toothed wheel (29) that is fixed to the shaft (15), wherein preferably each of the pawls (28) forms part of a spring-loaded lever (30) which is mounted to the shaft holding member (2) and which maintains the pawl (28) in engagement with the toothed wheel (29) by a spring force in the first condition and which disengages the pawl (28) from the toothed wheel (29) by rotating the lever (30) through a lever actuator (32) in the second condition.

13. An apparatus (1) according to claim 10 or 11, wherein each of the first and second freewheel mechanisms (26, 27) comprises a freewheel unit (26d, 27d) including a drivable side and a driven side, wherein the drivable side is connected to the shaft (15) in order to be driven by the shaft (15), and wherein the driven side is engageable with the shaft holding member (34) via a controllable friction coupling (26a, 26b, 27a, 27b, 35) for blocking the shaft (15) and the shaft holding member (34) with respect to each other in rotational direction of the shaft (15), wherein preferably the freewheel units (26d, 27d) are standard freewheel units.

14. An apparatus (1) according to claim 11 or claim 11 and 12, or claim 11 and 13, wherein the apparatus comprises an internal combustion engine (1), and the frame is formed by an engine block (2), wherein the engine (1) is further provided with a crankshaft (3) having at least a crankpin (4), said crankshaft (3) being supported by the engine block (2) and rotatable with respect thereto about a crankshaft axis (5), an eccentric element (6) for supporting a connecting rod (9), which eccentric element (6) is rotatably mounted on the crankpin (4), wherein said shaft is an adjusting shaft (15) for varying the rotational position of the eccentric element (6) with respect to the crankshaft (3) at a virtual standstill of the crankshaft (3) so as to vary its compression ratio, which adjusting shaft (15) extends concentrically through the crankshaft (3) such that its centreline coincides with the crankshaft axis (5) and which adjusting shaft (15) is rotatable with respect to the crankshaft (3), a transmission (12, 13, 14) through which the eccentric element (6) is drivably coupled to the adjusting shaft (15), wherein the connecting rod (9) forms the driving source for applying a torque on the adjusting shaft (15) under operating conditions, wherein the transmission (12, 13, 14) is adapted such that when the adjusting shaft (15) has a substantially fixed angular position with respect to the engine block (2) under operating conditions the eccentric element (6) rotates with respect to the crankpin (4) in opposite direction of the direction in which the crankshaft (3) rotates with respect to the engine block (2) about the crankshaft axis (5) and at half speed thereof.

15. A method of operating the internal combustion engine according to claim 13, wherein the first freewheel mechanism (26) is switched to its first condition and the second freewheel mechanism (27) is switched to its second condition so as to turn the adjusting shaft (15) to a different rotational position with respect to the engine block (2) by a torque on the adjusting shaft (15).
